(19) Europäisches Patentamt
European Patent Office
Office européen des brevets

(11) Veröffentlichungsnummer: **0 205 866**
**B1**

(12) # EUROPÄISCHE PATENTSCHRIFT

(45) Veröffentlichungstag der Patentschrift: **26.07.89**

(51) Int. Cl.⁴: **B01D 53/34**, B01J 8/08

(21) Anmeldenummer: **86106380.8**

(22) Anmeldetag: **10.05.86**

(54) **Verfahren zur trockenen Reinigung von Rauchgasen.**

(30) Priorität: **18.06.85 CH 2579/85**

(43) Veröffentlichungstag der Anmeldung: **30.12.86 Patentblatt 86/52**

(45) Bekanntmachung des Hinweises auf die Patenterteilung: **26.07.89 Patentblatt 89/30**

(84) Benannte Vertragsstaaten: **AT CH DE FR GB IT LI**

(56) Entgegenhaltungen:
**DE-A- 2 155 320**
**DE-A- 2 423 874**
**GB-A- 734 111**
**NL-A- 8 203 577**

(73) Patentinhaber: **Curtius, Friedrich, Dipl.-Ing., Schachener strasse 72, D-8990 Lindau(DE)**

(72) Erfinder: **Curtius, Friedrich, Dipl.-Ing., Schachener strasse 72, D-8990 Lindau(DE)**

(74) Vertreter: **Patentanwälte Dipl.-Ing. E. Eisele Dr.-Ing. H. Otten, Seestrasse 42, D-7980 Ravensburg(DE)**

**EP 0 205 866 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur trockenen Reinigung von Rauchgasen mit Hilfe von Alkali- und/oder Erdkali-Verbindungen.

Bei der Reinigung von Rauchgasen von gasförmigen Verbrennungsprodukten, wie Schwefeldioxid und Schwefeltrioxid ($SO_2$ bzw. $SO_3$), haben sich die nassen Verfahren mit einer Rauchgaswäsche wegen der günstigen Reaktionsbedingungen zur Schadstoffeinbindung im Taupunktsbereich bewährt. Hierbei sind jedoch eine Wiederaufheizung der gesättigten Gase vor dem Kamineintritt und eine Aufbereitung der nassen Reaktionsprodukte erforderlich. Besonders bei kleineren Anlagen unter 100 MW thermisch ist beides relativ teuer und aufwendig. Ausserdem wird bei der Rauchgas-Wäsche ein Teil des Wärmeinhalts der Rauchgase für die Verdampfung des Waschwassers verbraucht.

Aufgabe der Erfindung ist es, ein Verfahren für die Reinigung, insbesondere Entschwefelung von Rauchgasen, zu schaffen, bei dem der Aufwand verringert und die Wärmerückgewinnung verbessert sind. Diese Aufgabe wird nach der Erfindung dadurch gelöst, dass die Rauchgase in einer ersten Stufe eines turmartigen Reaktors, in dem ein Schüttgutstrom aus einem körnigen, rieselfähigen Wärmeträgermedium im Gegenstrom zu dem Rauchgas vertikal abwärtsfliesst, bis auf ihre Taupunktstemperatur abgekühlt und mit reaktionsfähigen Alkali- oder Erdalkali-Verbindungen in Kontakt gebracht werden, und dass ferner das Wärmeträgermedium in einer zweiten Stufe des Reaktors zurückgekühlt und der ersten Stufe erneut aufgegeben wird, wobei die Abkühlungstemperatur für die Rauchgase durch den Mengenfluss des abwärtsfliessenden Schüttgutes geregelt wird.

Unter Verwendung eines turmartigen Reaktors mit Wärmeträger können die Rauchgase ohne Gefahr einer Verstopfung auf den Taupunkt gekühlt werden und bei gleichzeitiger Zugabe eines Behandlungsmittels in den Wärmeträger oder bei der Wahl eines Behandlungsmittels als Wärmeträger die dampfförmigem Schadstoffe, insbesondere $SO_2$ und $SO_3$, simultan eingebunden werden.

Die heissen Rauchgase werden dabei in die ersten Stufe unten aufgegeben und im Gegenstrom zu einem kalten Wärmeträger nach oben geführt, wobei sie sich abkühlen. Sie durchlaufen dabei Temperaturbereiche, in denen Reaktionen mit als Behandlungsmittel vorhandenen Alkali- bzw. Erdalkali-Verbindungen - wie z. Beispiel Kalziumhydrat ($Ca(OH)_2$, Kalkmilch); Natronlauge ($NaOH$); Kalziumkarbonat ($CaCO_3$, Kalkstein); Natriumkarbonat ($Na_2CO_3$); Magnesiumhydrat ($Mg(OH)_2$); Magnesiumkarbonat ($MgCO_3$) und/oder Magnesiumoxid ($MgO$) - bevorzugt zu einer Bin dung des $SO_2$ und $SO_3$ an die Alkali- oder Erdalkali-Metalle verschoben sind, wodurch die Reinigung der Rauchgase besonders intensiviert wird.

Der Wärmeträger ist ein Schüttgut, das kontinuierlich aufgegeben wird. Als Schüttgut kann dabei Material gewählt werden, das sich gegen die Gase inert verhält. Als inertes Material, das auch für hohe Temperaturen geeignet ist und im Säuretaupunkt nicht angegriffen wird, sind beispielsweise Keramikkugeln anzusehen. Bei Temperaturen unter 150° C können Gummikugeln verwendet werden. Andere geeignete Schüttgutmaterialien sind Metallkugeln, Kies, Kieselsteine oder das erwähnte Kalziumcarbonat mit Korngrössen von 2 - 100 mm.

Bei einem Teil der genannten Wärmeträgermaterialien stellt sich ein Abrieb ein; Verluste an Wärmeträgermedium infolge von Abrieb oder Oberflächenabtrag durch Schadstoffeinbindung werden daher durch Einspeisung von frischen Wärmeträgermitteln ergänzt. Der Wärmeträger wird - mit Vorteil durch einen weiteren Gasstrom - in der zweiten Stufe eines turmartigen Reaktors ebenfalls im Gegenstrom auf eine Temperatur unterhalb des Taupunktes der Rauchgase gekühlt. Dabei findet in der ersten Stufe durch den Wärmeaustausch zwischen dem aufgegebenen kalten Wärmeträgermedium und dem Rauchgas an der Feststoffoberfläche eine Wasserdampfkondensation statt, die speziell die Reaktionsbedingungen für die $SO_2$ und $SO_3$ -Einbindung mit Kalziumcarbonat oder Kalziumhydrat verbessert. Um eine Taupunktunterschreitung in der ersten Stufe sicherzustellen, ist es erforderlich, den Fluss des kalten Wärmeträgermediums zu steuern; generell wird der Fluss des Wärmeträgermediums in Abhängigkeit von der Rauchgasmenge dabei beispielsweise so geregelt, dass eine Wärmeträgereintrittstemperatur in die erste Stufe erreicht wird, die 10 - 20° C unterhalb der Rauchgasaustrittstemperatur aus dieser Stufe ist. Zweckmässigerweise kann man dabei die Temperatur des Wärmeträgermediums an seinem Austritt aus der ersten Stufe messen und seinen Mengenfluss in Abhängigkeit von dieser Temperatur regeln.

Als Kühlgas in der zweiten Stufe kann man mit Vorteil Verbrennungsluft einsetzen, so dass der Wärmerückgewinn aus dem Rauchgas direkt auf die Verbrennungsluft in der Feuerung genutzt werden kann. Die Eintrittstemperatur der Luft liegt beispielsweise um 20 - 60° C unterhalb der Taupunkttemperatur der Rauchgase, um an der Wärmeträgeroberfläche eine Feuchte von 1 - 2 % einstellen zu können. Anderenfalls kann auf den Wärmeträger vor und/oder nach seiner Aufgabe bzw. Wiederaufgabe auf die erste Stufe zusätzlich Wasser oder eine wässrige Lösung einer Alkali- oder Erdalkali-Verbindung aufgegeben werden.

Die Strömungsgeschwindigkeit der Gase im turmartigen Reaktor erreicht - bezogen auf den Leerraumquerschnitt - beispielsweise Werte zwischen 0,1 und 1 m/sec, während die Fliessgeschwindigkeiten des Schüttgutes etwa 1/100 der Gasgeschwindigkeiten betragen. Die Druckverluste in den Reaktoren und damit der Energiebedarf wird von den Schütthöhen bestimmt. Dabei hängt die Höhe der Schüttung auch vom Querschnitt der Reaktoren ab. Bei einer Querschnittsfläche von 1 - 1,5 $m^2$ ist beispielsweise eine Schüttguthöhe von 2 - 5 m ausreichend. Bei Flächen von 30 $m^2$ bis 50 $m^2$ sind dagegen Schüttungshöhen

von 5 - 8 m erforderlich, um eine gleichmässige Gasverteilung im Schüttgut zu erreichen. Der Druckverlust der Gasseite beträgt dann beispielsweise zwischen 0.5 und 2 mPa (5 und 20 mbar).

Weiterhin kann man in den turmartigen Reaktor zwischen der ersten und der zweiten Stufe eine Zwischenstufe vorsehen, in der ein Teilstrom der in der erste Stufe gereinigten Rauchgase zur Anwärmung des die ersten Stufe verlassenden Gesamtstromes an gereinigten Rauchgasen aufgeheizt wird. Selbstverständlich ist es auch möglich, die in der zweiten Stufe aufgeheizte Verbrennungsluft - beispielsweise über einen Kreislauf für einen indirekten Wärmeaustausch - ohne Zwischenstufe zur Anwärmung der die erste Stufe verlassenden Rauchgase zu nutzen. Das gekühlte und gereinigte Rauchgas wird auf diese Weise wiederum um 20 - 30° C angewärmt, ehe es nach einer weiteren Reinigung, beispielsweise einer Filtrierung, in einen Abgaskamin gelangt.

Für eine kombinierte Reinigung der Rauchgase von Schwefel- und Stickoxiden hat es sich besonders bewährt, wenn heisse Rauchgasen einer Anlage zur Abscheidung von Stickoxiden mit Hilfe von $NH_3$ entnommen und ungekühlt in die erste Stufe des turmartigen Reaktors geführt werden. Mit dieser Massnahme ergeben sich energetisch und anlagenseitig besondere Vorteile, da beispielsweise eine Zwischenkühlung der entstickten Rauchgase vor der Entschwefelung entfallen kann.

Die Energiebilanz für das gesamte kombinierte Reinigungs verfahren wird dabei besonders günstig wenn als Trägermaterial zur Einspeisung von $NH_3$ in den Rauchgasstrom in der zweiten Stufe des turmartigen Reaktors aufgewärmte Luft verwendet wird. Eine Anlage für dieses kombinierte Verfahren lässt sich platzsparend und strömungs günstig ausgestalten, wenn die erste Stufe des turmartigen Reaktors von einer Anordnung zur Abscheidung von Stickoxiden ringförmig umschlossen ist, die von den heissen Rauchgasen von oben nach unten durchströmt ist und über einen ringförmigen Rauchgasdurchtritt mit der ersten Behandlungsstufe in Strömungsverbindung steht.

Als Werkstoffe für die turmartigen Reaktoren dienen im Bereich des Taupunkts der Rauchgase beispielsweise rostfreie Materialien und/oder mit Gummi oder Kunststoff beschichtete Kohlenstoffstähle.

Im folgenden wird die Erfindung anhand von Ausführungsbeispielen im Zusammenhang mit der Zeichnung näher erläutert.

Fig 1. ist schematisch eine erste Anlage für die Durchführung des erfindungsgemässen Verfahrens;

Fig. 2 gibt eine ähnliche Anlage wieder, bei der zwischen den beiden Behandlungsstufen eine Zwischenstufe eingesetzt ist;

Fig. 3 zeigt als Detail aus Fig. 1 eine Variante der Anlage für die Durchführung einer Entstickung und einer Entschwefelung.

Das Kernstück einer Anlage zur Durchführung des neuen Verfahrens ist ein turmartiger Reaktor 1; er enthält zwei in einem gemeinsamen Stahlgehäuse 2 beliebigen Querschnitt untergebrachte Behandlungsstufe A und B, die durch eine horizontale Trennwand 9 voneinander getrennt sind. Die Behandlungsstufe A, die sich unten trichterartig verengt und mit ihrem Trichter 3 in die Trennwand 9 "eingesteckt" ist, hat eine Gaseintrittsöffnung 4 im Bodenbereich und eine Gasaustrittsöffnung 5 nahe ihrer Dekke. In diese mündet über einen Stutzen 7 eine Zuführleitung 6, über die körniges Schüttgut 8 in die Behandlungsstufe A eingespeist wird. An die Gasaustrittsöffnung 5 ist eine Gasleitung 10 angeschlossen, die zu weiteren Behandlungsstationen für die gereinigten Rauchgase führt, wie später noch beschrieben wird.

Der Gaseintritt 4 führt in einen Ringraum 11, der innen vom Trichter 3 begrenzt ist. Gasdurchtrittsöffnungen 12 im Trichter 3 stellen die Strömungsverbindung zum Schüttgut 8 her, durch das die zu reinigenden Rauchgase die Stufe A von unten nach oben durchsetzen. Der Trichter 3 endet in einem Rohr 13, das durch die Trennwand 9 in die Stufe B führt. Trichter 3 und Rohr 13 bilden Strömungsleitelemente für den Schüttgutfluss aus der Stufe A in die Stufe B.

Der grundsätzliche Aufbau der Behandlungsstufe B ist gleich demjenigen der Behandlungsstufe A. Auch bei der Stufe B ist unten ein Gaseintritt 15 vorgesehen, der in einen Ringraum 16 führt; dieser Ringraum 16 wird innen von zwei ebenfalls trichterartigen, mit Durchtrittsöffnungen 17 für das Gas vorsehenen Jalousien 18 begrenzt, bei denen die Durchtrittsöffnungen 17 ebenso wie der überwiegende Teil des Gehäuseinneren wiederum mit Schüttgut 8 gefüllt sind. Die Trichter der Jalousien 18 enden in je einem Rohr 14, in dem für einen geregelten Transport oder Mengenfluss des Schüttgutes 8 je eine Zellenradschleuse 20 vorhanden ist. Oberhalb des Schüttgutkegels ist in der Stufe B, ähnlich wie in der Stufe A, ein mit Gas gefüllter Hohlraum vorhanden, aus dem ein Gasaustritt wegführt.

Das Schüttgut 8 durchsetzt die Behandlungsstufen A bzw. B aufgrund der Schwerkraftwirkung in einem kontinuierlichen Strom, der über die Zellenradschleusen 20 geregelt wird. Im Gegenstrom dazu strömt in jeder Behandlungsstufe Gas von unten nach oben.

Ein über den Querschnitt des Gehäuses 2 im Schüttgut 8 gleichmässiges Temperaturprofil kann durch in den Schüttgutstrom eingebaute nicht gezeigte statische Mischelemente und/oder tropfenförmige Verdrängungskörper erreicht bzw. verbessert werden. Weiterhin ist es möglich, die Zellenradschleusen 20 durch andere gebräuchliche Siloaustragsvorrichtungen, wie Förderbänder ode Schubböden, zu ersetzen.

Die Anlage nach Fig. 1 dient beispielsweise der Rauchgasreinigung einer kohlengefeuerten Heizzentrale. Als Wärmeträger oder Schüttgut 8 wird Porphyr mit Körnungen zwischen 5 und 50 mm verwendet.

Als Behandlungs- oder Entschwefelungsmittel dient Kalziumhydrat ($Ca(OH)_2$), das in die Anlage als Pulver eingespeist wird. Seine Durchsatzmenge beträgt 20 kg/h, sein Durchschnittskorn 20 - 30 µm und sein Schüttgewicht 0,5 t/m³.

DieStufe A ist von den Rauchgasen, die gereinigt bzw. entschwefelt werden müssen, durchströmt, während durch die Stufe B als Wärme aus dem Wärmeträger oder Schüttgut 8 aufnehmendes Gas Luft fliesst, die später als Verbrennungsluft in der Feuerung der Heizzentrale verwendet wird.

Das zu reinigende Rauchgas wird in die Stufe A über eine Leitung 22 eingespeist; seine Eintrittstemperatur in den Reaktor 1 beträgt beispielsweise 220° C. Es verlässt die Stufe A durch die Leitung 10 mit etwa Taupunkttemperatur von etwa 45° C, wird in einem Wärmetauscher 23 auf etwa 70° C aufgewärmt und durchströmt, gefördert von einem Ventilator oder Gebläse 25 zur Nachreinigung ein Tuchfilter 24, ehe es in den Kamin 26 gelangt.

Der Wärmetauscher 23 ist Teil eines geschlossenen Kreislaufs 27, in dem, angetrieben von einer Pumpe 28, ein Wärmetransportmittel, z.B. Wasser, zirkuliert und Wärme, die einem heissen Luftstrom entzogen wird, dem Wärmetauscher 23 zuführt.

Die heisse Luft entstammt der Stufe B des Reaktors 1, aus der sie durch die Leitung 30 als Verbrennungsluft der nicht gezeigten Feuerung der Heizzentrale zufliesst.

Als Kühlmittel für die Rauchgase in der Stufe A dient der schwerkraftangetriebene Schüttgutsfluss; das pulverförmige Kalziumhydrat wird der Anlage über eine Leitung 31 aufgegeben. Die Leitung 31 mündet dabei in die Reingasleitung 10 vor dem Filter 24. Auf diese Weise wird zum einen sichergestellt, dass im Filter 24 eine praktisch neutrale Atmosphäre herrscht, da ein sehr hoher Ueberschuss an Behandlungsmittel - relativ zu den geringen Mengen an Schwefeldioxiden im gereinigten Rauchgas - vorhanden ist. Das pulverförmige Behandlungsmittel wird im Filter 24 als Staub ausgeschieden und über eine Leitung 44 in den Fluss des in einem geschlossenen Kreislauf geführten Schüttgutes 8 eingespeist. Diese Einspeisung erfolgt am zweckmässigsten in eine Leitung 45, die vom dem Schüttgut-Austritt 14 des Reaktors 1 zu einer Fördereinrichtung 35 führt.

Das Schüttgut 8, dessen geschlossener Kreislauf durch die Anlage nunmehr beschrieben sei, gelangt von den Zellenradschleusen20 am Austritt 14 der Stufe B über die Leitung 45 zunächst in einen Sichter 37; in diesem wird beispielsweise durch eine vibrierte Schurre hindurch mit Hilfe eines in sich geschlossenen Luftkreislaufes 32, der einen Ventilator 33 und einen Zyklonabscheider 34 enthält, Staub aus dem Schüttgut 8 ausgeschieden; dieser Staub besteht zum einen aus mit den Schadstoffen aus den Rauchgasen beladenem pulverförmigen Behandlungsmittel und zum anderen aus Abrieb des körnigen Schüttgutes B. Vom Sichter 37, gelangt das Schüttgut 8 mit Hilfe der Fördereinrichtung 35, die beispielsweise als Gurtbecherwerk ausgebildet ist, in die Zuführleitung 6 für seine Einspeisung in die Stufe A.

Schüttgutverluste durch den abgeriebenen Staub, der über eine Leitung 36 aus dem Zyklon 34 und der Anlage entfernt wird, werden durch eine Einspeisung 38 ergänzt, in die gegebenenfalls auch Behandlungsmittel über eine Einspeiseleitung 39 eingegeben werden kann, besonders dann, wenn das Behandlungsmittel eine Flüssigkeit - im vorliegenden Beispiel also Kalkmilch, beispielsweise in einer Menge von 140 dm³/h und Konzentrationen von 10 % - ist. Bei der Zugabe eines flüssigen Behandlungsmittels kann das Wasser der Lösung dabei gleichzeitig zur Erhöhung der Feuchte bei der Abkühlung der Rauchgase unter den Taupunkt im oberen Bereich der Schüttgut-Schüttung in der Stufe A dienen.

Soll nicht sämtlicher, zum Teil aus dem Behandlungsmittel bestehender, Staub aus der Anlage entfernt werden, so kann ein Teilstrom des staubbeladenen Schüttgutes 8 am Sichter 37 über eine Bypassleitung 46 vorbeigeführt werden; auf diese Weise ist es möglich, das pulverförmige Behandlungsmittel mehrfach durch die Anlage zirkulieren zu lassen und damit intensiver zu nutzen.

Die erwähnte Rückkühlung des Schüttgutes in der Stufe B erfolgt mittels eines Luftstromes, der gefördert durch ein Gebläse 41 über eine Zuführleitung 40 und den Gas eintritt 15 unten in die Stufe B eingespeist wird; seine Eintrittstemperatur beträgt beispielsweise 20° C. In der Stufe B wird er bei der Abkühlung des Schüttgutes 8 auf etwa 200° C aufgeheizt, tritt also mit dieser Temperatur in die Leitung 30 und den Wärmetauscher 29 ein, in dem er einen Teil seiner Wärme an das Transportmittel im Kreislauf 27 abgibt.

Wie bereits erwähnt, muss der Mengenfluss des Schüttgutes 8 durch den Reaktor 1 an die zu reinigende Rauchgasmenge angepasst werden, um eine Abkühlung unter den Taupunkt sicherzustellen. Die Steuerung des Mengenflus ses des Schüttgutes 8 erfolgt dabei beispielsweise über einen Regler 42. Diesem fliesst als Messwert die Temperatur des Schüttgutes 8 am Austritt aus der Stufe A zu, die z.B. durch einen Temperaturfühler 43 im Rohr 13 ermittelt wird. Nach einem Sollwert/Istwert-Vergleich verstellt der Regler 42 beispielsweise die nicht gezeigten Antriebe für die Zellenradschleusen 20, falls eine Aenderung des Schüttgutflusses erforderlich ist.

Durch die Abkühlung bis zum Taupunkt werden die Schadstoffe, vor allem also $SO_2$ und $SO_3$ in die flüssige Phase übergeführt, in der sie intensiv mit dem Kalzium des Behandlungsmittels reagieren und als Sulfit gebunden werden. Dabei erfolgt die Einbindung durch folgende Reaktionsgleichung:

$$Ca(OH)_2 + SO_2 \rightleftharpoons CaSO_3 \cdot 1/2\ H_2O + 1/2\ H_2O.$$

Die Anlage nach Fig. 2 ist derjenigen nach Fig. 1 sehr ähnlich; in ihr wird als Schüttgut 8 Kalkstein (Kalziumcarbonat ($Ca\ CO_3$)) verwendet, der gleichzeitig als Wärmeträger und als Behandlungsmittel wirksam ist.

In der Anlage nach Fig. 2 entfallen daher die Leitung 31 und 39 für die Zugabe von pulverförmigen bzw. flüssigen Behandlungsmitteln. In der Bypassleitung 46, durch die der Sichter 37 überbrückt wird, ist zusätzlich ein Mahlwerk 48 vorgesehen, durch das ein Teil der körnigen Schüttgutpartikel, deren Oberfläche aus mit den Schadstoffen gebildeten Schwefelsalzen besteht, aufgebrochen wird, um neue reaktionsfähige Oberflächen am Schüttgut 8 zu schaffen, soweit nicht durch die Aufweichung infolge einer Volumenvergrösserung in Verbindung mit der Reibung in dem fliessenden Schüttgut eine "Selbstaktivierung" des Schüttgutes 8 stattfindet.

Die Zellenradschleusen 20 sind in der Anlage nach Fig. 2 durch ein Förderband 59 ersetzt, das von einem Antrieb 49 angetrieben ist. Dieser wird vom Regler 42 in der für den Antrieb der Zellenradschleusen 20 in Fig. 1 beschriebenen Weise geregelt.

Da ein Behandlungsmittelstaub aus dem Filter 24 nicht in den Schüttgutkreislauf eingespeist werden muss, mündet die Leitung 44 für den Feststoffabtransport aus diesem Filter 24 in die Leitung 36, mit der staubförmige Abfallstoffe aus der Anlage herausgeführt werden.

Der wesentliche Unterschied zwischen den beiden Anlagen besteht jedoch darin, dass der Wiederaufheizungskreislauf 27 für das den Reaktor 1 verlassende, gereinigte Rauchgas durch eine Zwischenstufe C im Reaktor 1 ersetzt ist, deren Aufbau gleichartig mit demjenigen der StufenA und B ist. Durch diese Zwischenstufe C wird über den Gaseintritt 51, den Hohlraum 52 und den mit Oeffnungen 53 versehenen Trichter 54, gefördert von einem Ventilator 50 in einer Leitung 58, ein Teilstrom des gereinigten Rauchgases geführt. Dieser relativ kühle Gasstrom wird in der Zwischenstufe C aufgeheizt und dem mit Taupunkttemperatur aus dem Reaktor 1 austretenden Rauchgas in einem Mischer 55 beigemischt, so dass die Rauchgas-Temperatur wie beim ersten Beispiel erhöht wird. Der als Heizmittel dienende Teilstrom gereinigten Rauchgases gelangt dabei vom Austritt 56 der Zwischenstufe C über eine Leitung 57 in den Mischer 55.

Die Einbindung der Schwefeloxide erfolgt bei der Verwendung von Kalkstein als Schüttgut bzw. Behandlungsmittel nach den Reaktionsgleichungen:

$$2\ CaCO_3 + 2\ SO_2 + H_2O \rightleftharpoons 2\ CaSO_3 \cdot 1/2\ H_2O + 2\ CO_2$$

bzw.

$$CaCO_3 + SO_3 \rightleftharpoons CaSO_4 + CO_2$$

Wie erwähnt, wird das Sulfit in Anwesenheit von Sauerstoff, der insbesondere in der Luft der Stufe B enthalten ist, zu Sulfat aufoxidiert nachder Gleichung:

$$2\ CaSO_3 + O_2 \rightleftharpoons 2\ CaSO_4.$$

Die Tabelle1 zeigt für die Beispiele 1 und 2 quantitative Daten für Rauchgasreinigungen von zwei kohlegefeuerten kleinen Kraftwerken bzw. Heizzentralen nach dem neuen Verfahren.

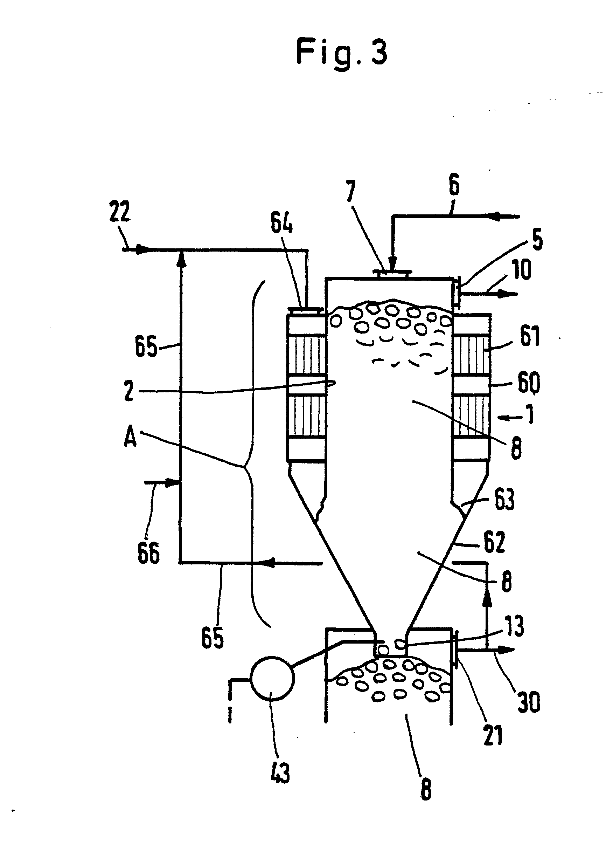

Die in Fig. 3 gezeigte Modifikation der Stufe A des Reaktors 1 ist für die Durchführung einer kombinierten Reinigung, d.h. einer Entstickung und Entschwefelung der Rauchgase, konzipiert. In der dargestellten Form bildet sie einen Ausschnitt und eine Variante der Anlage nach Fig. 1, so dass für die gegenüber Fig. 1 unveränderten Elemente die dortigen Bezugsziffern beibehalten worden sind.

Das Stahlgehäuse 2 des Reaktors 1 ist aussen von einer ringförmigen Kammer 60 umgeben, in der zwei Reihen Katalysatoren 61 für den $NO_x$-Abbau mit Hilfe von Ammoniak ($NH_3$) übereinander angeordnet sind. Der $NO_x$-Abbau in der Kammer 60 erfolgt nach einem der bekannten Verfahren, beispielsweise nach einem SCR-Verfahren, bei dem die Stickoxide in einem Temperaturbereich von 300 - 400° C mittels Ammoniak zu Stickstoff und Wasser umgesetzt werden. In diesem Fall bestehen die Katalysatoren beispielsweise aus $TiO_2$.

Es ist jedoch auch möglich, andere Entstickungsverfahren anzuwenden, wie dasjenige mit Molekularsieb- oder Zeolith-Katalysatoren.

An die Kammer 60 schliesst sich nach unten ein Trichter 62 an, der in dem Rohr 13 endet, welches wie in Fig. 1 den Uebergang zur Stufe B des Reaktors 1 bildet. Der Trichter 62 ist grösstenteils mit Schüttgut 8 gefüllt, welches den Reaktor 1 in der beschriebenen Weise von oben nach unten durchsetzt.

Zwischen dem unten offenen Zylinder des Gehäuses 2 und dem Trichter 61 verbleibt ein ringförmiger Spalt 63, der durch den Kegel des abwärts fliessenden Schüttgutes 8 "verschlossen" ist. Der Spalt 63 bildet eine ringförmige Durchtrittsöffnung für die Rauchgase in die Stufe A, in der diese Gase im Gegenstrom zum Schüttgut 8 von unten nach oben strömen.

Im Unterschied zu Fig. 1 endet die Zuführleitung 22 für die zu reinigenden heissen Rauchgase in einem Anschluss-Stutzen 64 an der Oberseite der Kammer 60. Vor ihrem Eintritt in den Reaktor 1 bzw. die Kammer 60 mündet in diese Leitung 22 eine Einspeiseleitung 65, über die mit Hilfe von Trägerluft $NH_3$ in den Rauchgasstrom eingespeist wird. Für eine gute Durchmischung der beiden Gasströme kann stromabwärts der Einspeisestelle ein nicht gezeigter Mischer - ähnlich dem Mischer 55 der Leitung 10 von Fig. 2 - vorgesehen sein.

Als Trägerluft für das über eine Leitung 66 zugeführte $NH_3$ dient in der Stufe B des Reaktors 1 aufgewärmte Luft, die aus der die Stufe B verlassenden Leitung 30 für die Verbrennungsluft entnommen wird.

In ihrem übrigen Aufbau entspricht die Anlage nach Fig. 3 - abgesehen von der Dimensionierung - derjenigen nach Fig. 1.

Die einer Anlage nach Fig. 3 zugeführten heissen Rauchgase haben in der Leitung 22 vor der $NH_3$-Einspeisung beispielsweise eine Temperatur von 356° C; mit etwa 1/10 der Rauchgasmenge als Trägerluft, die eine Temperatur von etwa 345° C hat, wird $NH_3$ in die Leitung 22 eingespeist, wobei die Rauchgase eine Abkühlung um etwa 1° C erfahren.

In bekannter Weise erfolgt der $NO_x$-Abbau in der Kammer 60 nach der Formel 6

$$6\ NO + 4\ NH_3 \rightleftharpoons 5\ N_2 + 6\ H_2O.$$

Der Wärmeverlust der Rauchgase in der Kammer 60 ist bedeutungslos, so dass ihre Eintrittstemperatur in die Stufe A praktisch gleich derjenigen bei ihrem Eintritt in die Kammer 60 ist.

Die Entschwefelungsbehandlung entspricht - abgesehen von den Durchsatzmengen - dem im Zusammenhang mit Fig. 1 beschriebenen Verfahren.

Durch die Dynamik des Entschwefelungs-Reaktors und die Unempfindlichkeit und Beständigkeit der Schüttgutschicht 8 gegen Verstopfen und Korosion ist das Verfahren einer kombinierten Rauchgasreinigung auch unempfindlich gegenüber den Reaktionsprodukten Ammoniumsulfat bzw. Ammoniumhydrogensulfat, die sich aus $SO_2$ und dem restlichen $NH_3$ bilden können.

In Tabelle 2 sind quantitative Daten für ein Ausführungsbeispiel einer kombinierten Rauchgasreinigung in einer Anlage nach Fig. 3 zusammengestellt.

Tabelle 1:

| Bauchgas | Beispiel 1 | Beispiel 2 |
|---|---|---|
| Volumenstrom $Nm^3/h$ | 6700 | 50 000 |
| $SO_2$-Gehalt $mg/Nm^3$ | 2000 | 1900 |
| Staub $mg/Nm^3$ | 3700 | 1000 |
| Eintrittstemperatur in den Reaktor °C | 220 | 180 |
| Taupunkt, zugleich Austrittstemperatur aus dem Reaktor °C | etwa 45° | etwa 45° |
| Temperatur am Kamin °C | 70 | 80 |
| $SO_2$-Gehalt am Kamin $mg/Nm^3$ | 200 | 200 |
| Staub am Kamin $mg/Nm^3$ | 10 | 10 |
| Rückgeführtes Volumen $Nm^3/h$ | – | 18 500 |
| Eintrittstemperatur in den Reaktor (rückgeführtes Vol.) °C | – | 80 |
| Austrittstemperatur aus dem Reaktor (rückgeführtes Vol.) °C | – | 175 |
| Reaktor | | |
| Schüttgut | Porphyr | Kalkstein |
| Zirkulierender Mengenfluss t/h | 11 | 78 |
| Behandlungsmittel | $Ca(OH)_2$ | $CaCO_3$ |
| Aufgabe/Verbrauch (Behandlungsmittel) kg/h | 20 | 135 |
| Korngröße des Schüttgutes mm | 5–50 | 2–50 |
| Eintrittstemperatur, zugleich Austrittstemperatur aus dem Reaktor °C | 20 | 20 |
| Feste Abfallstoffe, einschl. Flugstaub kg/h | 55 | 190 |
| Frisch-bzw- Verbrennungsluft | | |
| Volumenstrom $Nm^3/h$ | 6500 | 50 000 |
| Eintrittstemperatur in den Reaktor °C | 20 | 20 |
| Austrittstemperatur aus dem Reaktor °C | 178 | 120 |
| Wärmerückgewinnung $KW_{th}$ | 372 | 1800 |

Tabelle 2:

| | |
|---|---|
| **Rauchgas** | |
| Volumenstrom $Nm^3$ | 50 000 |
| $SO_2$-Gehalt $mg/Nm_3$ | 1900 |
| Staub $mg/Nm^3$ | 3700 |
| $NO_x$ | 850 |
| Eintrittstemperatur °C | 356 |
| Taupunkt, zugleich Austrittstemperatur aus dem Reaktor °C | 45 |
| Temperatur am Kamin °C | 70 |
| $SO_2$-Gehalt am Kamin $mg/Nm^3$ | 200 |
| $NO_x$-Gehalt am Kamin $mg/Nm^3$ | 200 |
| Staubgehalt am Kamin $mg/Nm^3$ | 10 |
| **Reaktoren** | |
| $NO_x$-Stufe: | |
| Vorgewärmte Trägerluft für $NH_3$ $Nm^3/h$ | 5000 |
| Temperatur °C | 345 |
| Gesamtgasmenge $Nm^3/h$ | 55 000 |
| Reaktoreintrittstemperatur °C | 355 |
| $NH_3$-Aufgabe kg/h | 9,4 |
| Reaktoraustrittstemperatur °C | 355 |
| $SO_2$-Stufe/Wärmetauscher: | |
| Schüttgut | Porphyr |
| Zirkulierender Mengenfluß t/h | 84,3 |
| Behandlungsmittel | $Ca(OH)_2$ |
| Aufgabe/Verbrauch kg/h | 150 |
| Korngröße des Schüttgutes mm | 2–50 |
| Eintrittstemperatur, zugleich Austrittstemperatur °C | 20 |
| Feste Abfallstoffe, einschl. Flugstaub kg/h | 414 |
| **Frisch-bzw. Verbrennungsluft** | |
| Volumenstrom $Nm^3/h$ | 55 000 |
| Eintrittstemperatur in den Reaktor °C | 20 |
| Austrittstemperatur aus dem Reaktor °C | 345 |
| Wärmerückgewinn $kW_{th}$ | 5100 |

**Patentansprüche**

1. Verfahren zur trockenen Reinigung von Rauchgasen mit Hilfe von Alkali- und/oder Erdalkali-Verbindungen, dadurch gekennzeichnet, dass die Rauchgase in einer ersten Stufe (A) eines turmartigen Reaktors (1), in dem ein Schüttgutstrom aus einem körnigen, rieselfähigen Wärmeträgermedium (8) im Gegenstrom zu dem Rauchgas vertikal abwärts fliesst, bis auf ihre Taupunkttemperatur abgekühlt und mit reaktionsfähigen Alkali- oder Erdalkali-Verbindungen in Kontakt gebracht werden, und dass ferner das Wärmeträgermedium (8) in mindestens einer zweiten Stufe (B, C) des Reaktors (1) zurückgekühlt und der ersten Stufe (A) erneut aufgegeben wird, wobei die Abkühlungstemperatur für die Rauchgase durch den Mengenfluss des abwärts fliessenden Schüttgutes (8) geregelt wird.

2. Verfahren nach Anspruch 1, dadurch gekennzeichnet, dass als Wärmeträgermedium (8) mindestens teilweise eine mit den Rauchgasen reaktionsfähige Kalziumverbindung verwendet wird.

3. Verfahren nach Anspruch 1, dadurch gekennzeichnet, dass die Rückkühlung des Wärmeträgermediums (8) in der zweiten Stufe (B, C) ebenfalls mittels eines im Gegenstrom dazu geführten Gases durchgeführt wird.

4. Verfahren nach Anspruch 3, dadurch gekennzeichnet, dass durch die zweite Stufe (B) als Kühlgas Luft geführt wird.

5. Verfahren nach Anspruch 1, dadurch gekennzeichnet, dass der Mengenfluss des Wärmeträgermediums (8) durch seine Temperatur am Austritt (13) aus der ersten Stufe (A) geregelt wird.

6. Verfahren nach Anspruch 1, dadurch gekennzeichnet, dass in dem turmartigen Reaktor (1) zwischen der ersten und der zweiten Stufe (A bzw. B) eine Zwischenstufe (C) vorgesehen wird, in der ein Teilstrom der in der ersten Stufe (A) gereinigten Rauchgasen zur Anwärmung des die erste Stufe (A) verlassenden Gesamtstromes an gereinigten Rauchgasen aufgeheizt wird.

7. Verfahren nach Anspruch 1, dadurch gekennzeichnet, dass die Taupunktsbedingungen in der Reaktionszone der ersten Stufe (A) durch eine Aufgabe von Wasser oder einer wässrigen Lösung von Alkali- oder Erdalkali-Verbindungen auf den Wärmeträger (8) intensiviert wird.

8. Verfahren nach Anspruch 1, dadurch gekennzeichnet, dass heisse Rauchgase einer Anlage zur Abscheidung von Stickoxiden mit Hife von $NH_3$ entnommen und ungekühlt in die erste Stufe (A) des turmartigen Reaktors (1) geführt werden.

9. Verfahren nach Anspruch 4 und 8, dadurch gekennzeichnet, dass als Trägermaterial zur Einspeisung von $NH_3$ in den Rauchgasstrom in der zweiten Stufe (B) des turmartigen Reaktors (1) aufgewärmte Luft verwendet wird.

10. Verwendung einer Anlage zur Durchführung des Verfahrens nach Anspruch 1, dadurch gekennzeichnet, dass in einem turmartigen Reaktor (1) mindestens zwei bezüglich des Schüttgutflusses hintereinander liegende, je von einem Gasstrom durchsetzte Behandlungsstufen (A, B) vorgesehen sind, dass ferner das Schüttgut (8) in der Anlage im Kreislauf geführt ist, und dass schliesslich eine Steuervorrichtung (42) vorgesehen ist, durch die der Mengenfluss des Schüttgutes (8) durch die Behandlungsstufen (A, B) gesteuert wird.

11. Anlage nach Anspruch 10, dadurch gekennzeichnet, dass die erste Stufe (A) des turmartigen Reaktors (1) von einer Anordnung (60, 61) zur Abscheidung von Stickoxiden mindestens teilweise umschlossen ist, die von den heissen Rauchgasen von oben nach unten durchströmt ist und über einen Rauchgasdurchtritt (63) mit der ersten Behandlungsstufe (A) in Strömungsverbindung steht.

## Claims

1. A method for the dry cleansing of flue-gases using alkali and/or earth alkali compounds, characterised in that the flue-gases are cooled to their dew-point temperature in a first stage (A) of a tower-like reactor (1) in which a flow of bulk material consisting of a granular, pourable heat carrier medium (B) flows vertically downwardly in counter-current to the flue-gas, and is brought into contact with reactable alkali or earth alkali compounds and in that furthermore the heat carrier medium (8) is re-cooled in at least one second stage (B, C) of the reactor (1) and is fed again into the first stage (A), the cooling temperature for the flue-gases being regulated by the quantitative flow of downwardly-flowing bulk material (8).

2. A method according to Claim 1, characterised in that a calcium compound capable of reacting with the flue-gases is at least partially used as the heat carrier medium (8).

3. A method according to Claim 1, characterised in that the re-cooling of the heat carrier medium (8) in the second stage (B, C) is likewise carried out by means of a gas which is conveyed in counter-current thereto.

4. A method a according to Claim 3, characterised in that air is passed through the second stage (B) to serve as a cooling gas.

5. A method according to Claim 1, characterised in that the quantitative flow of heat carrier medium (8) is regulated by its temperature at the outlet (13) from the first stage (A).

6. A method according to Claim 1, characterised in that in the tower-like reactor (1), between the first and second stages (A, B) there is an intermediate stage (C) in which a part of the flow of flue-gases cleansed in the first stage (A) is heated up as means of raising the temperature of the overall flow of cleansed flue-gases leaving the first stage (A).

7. A method according to Claim 1, characterised in that the dew-point conditions in the reaction zone of the first stage (A) are intensified by feeding water or an aqueous solution of alkali or earth alkali compounds to the heat carrier (8).

8. A method according to Claim 1, characterised in that hot flue-gases are drawn from a plant for separating nitric oxides by means of $NH_3$ and, without being cooled, are conveyed into the first stage (A) of the tower-like reactor (1).

9. A method according to Claim 4 and 8, characterised in that air heated in the second stage (B) of the tower-like reactor (1) is used as the carrier material for feeding $NH_3$ into the flow of flue-gas.

10. The use of a plant for carrying out the method according to Claim 1, characterised in that in a tower-like reactor (1) there are at least two processing stages (A, B) through each of which a gas flow passes, the stages being disposed one after the other in relation to the flow of bulk materials and in that furthermore the bulk material (B) is passed in a circuit through the plant and in that finally a control device (42) is provided by which the quantitative flow of bulk material (8) through the processing stages (A, B) is controlled.

11. A plant according to Claim 10, characterised in that the first stage (A) of the tower-like reactor (1) is at least partially enclosed by an arrangement (60, 61) for the separation of nitric oxides, the heated flue-gases passing through the arrangement (60, 61) from the top and downwardly, communicating with the first processing stage (A) via a flue-gas passage (63).

## Revendications

1. Procédé de purification de gaz de fumée par voie sèche à l'aide de composés alcalines et/ou alcalino-terreux, caractérisé en ce que les gaz de fumée, dans un premier étage (A) d'un réacteur en forme de tour (1), dans lequel s'écoule, en descendant verticalement, à contre-courant des gaz de fumée, un courant de produit en vrac constitué d'un milieu caloporteur (8), susceptible de couler, en grains, sont refroidis jusqu'à leur température du point de rosée et sont amenés au contact des composés alcalins ou alcalino-terreux réactifs, et en ce que, en outre, le milieu caloporteur (8) est refroidi dans au moins un deuxième étage (B, C) du réacteur (1) et est chargé, à l'état régénéré, dans le premier étage (A), la température de refroidissement des gaz de fumée étant réglée par le débit de produit en vrac (8) s'écoulant en descendant.

2. Procédé selon la revendication 1, caractérisé en ce que, en tant que milieu caloporteur (8), on utilise, au moins partiellement, un composé de calcium réactif vis-à-vis des gaz de fumée.

3. Procédé selon la revendication 1, caractérisé en ce que le refroidissement du milieu caloporteur (8) dans le deuxième étage (B, C) est effectué de même au moyen d'un gaz guidé à cet effet à contre-courant.

4. Procédé selon la revendication 3, caractérisé en ce que, dans le deuxième étage (B), on utilise de l'air comme gaz de refroidissement.

5. Procédé selon la revendication 1, caractérisé en ce que le débit de milieu caloporteur (8) est réglé par sa température à la sortie (13) du premier étage (A).

6. Procédé selon la revendication 1, caractérisé en ce que, dans le réacteur en forme de tour (1), on prévoit, entre le premier étage (A) et le deuxième étage (B), un étage intermédiaire (C), dans lequel une partie du courant des gaz de fumée purifiés dans le premier étage (A) est réchauffée sur des gaz de fumée purifiés pour chauffer tout le courant quittant le premier étage (A).

7. Procédé selon la revendication 1, caractérisé en ce que les conditions de point de rosée dans la zone de réaction du premier étage (A) sont intensifiées par une alimentation d'eau ou d'une solution aqueuse de composés alcalins ou alcalino-terreux sur le milieu caloporteur (8).

8. Procédé selon la revendication 1, caractérisé en ce que des gaz de fumée chauds d'une installation d'extraction d'oxydes d'azote à l'aide de $NH_3$, prélevés et non refroidis, sont amenés dans le premier étage (A) du réacteur en forme de tour (1).

9. Procédé selon les revendications 4 et 8, caractérisé en ce que, en tant que milieu porteur pour l'alimentation de $NH_3$ dans le courant de gaz de fumée, on utilise, l'air réchauffé, dans le deuxième étage (B) du réacteur en forme de tour (1).

10. Utilisation d'une installation pour la mise en œuvre du procédé selon la revendication 1, caractérisée en ce que, dans un réacteur en forme de tour (1), sont prévus au moins deux étages de traitement (A, B) traversés, chacun, par un courant gazeux et disposés l'un derrière l'autre relativement au flux de produit en vrac, en ce que, de plus, le produit en vrac (8) dans l'installation est recyclé, et en ce que, enfin, on prévoit un dispositif de commande (42), grâce auquel le débit du produit en vrac (8) à travers les étages de traitement (A, B) est commandé.

11. Installation selon la revendication 10, caractérisée en ce que le premier étage (A) du réacteur en forme de tour (1) est entouré au moins partiellement d'un agencement (60, 61) pour l'extraction d'oxydes d'azote, qui est traversé, de haut en bas, par les gaz de fumée chauds et qui est en liaison d'écoulement avec le premier étage de traitement (A) par un passage de gaz de fumée (63).

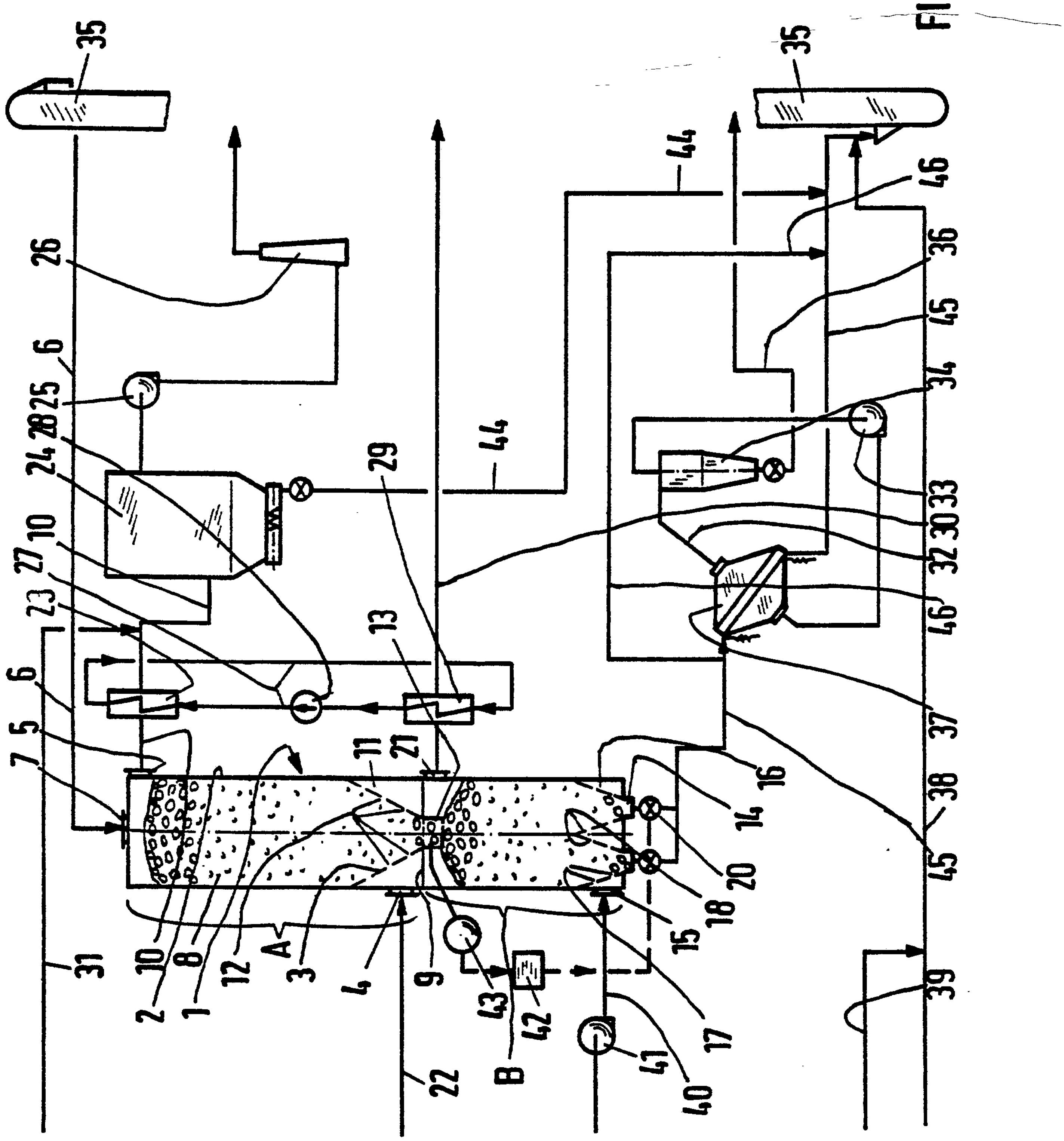
35
35
26
6
25
28
24
10
27
23
6
5
7
29
44
44
13
21
11
36
45
46
46
34
33
30
32
37
16
14
38
45
20
18
15
17
31
10
2
8
1
12
A
3
4
9
43
42
B
22
41
40
39

FIG.1

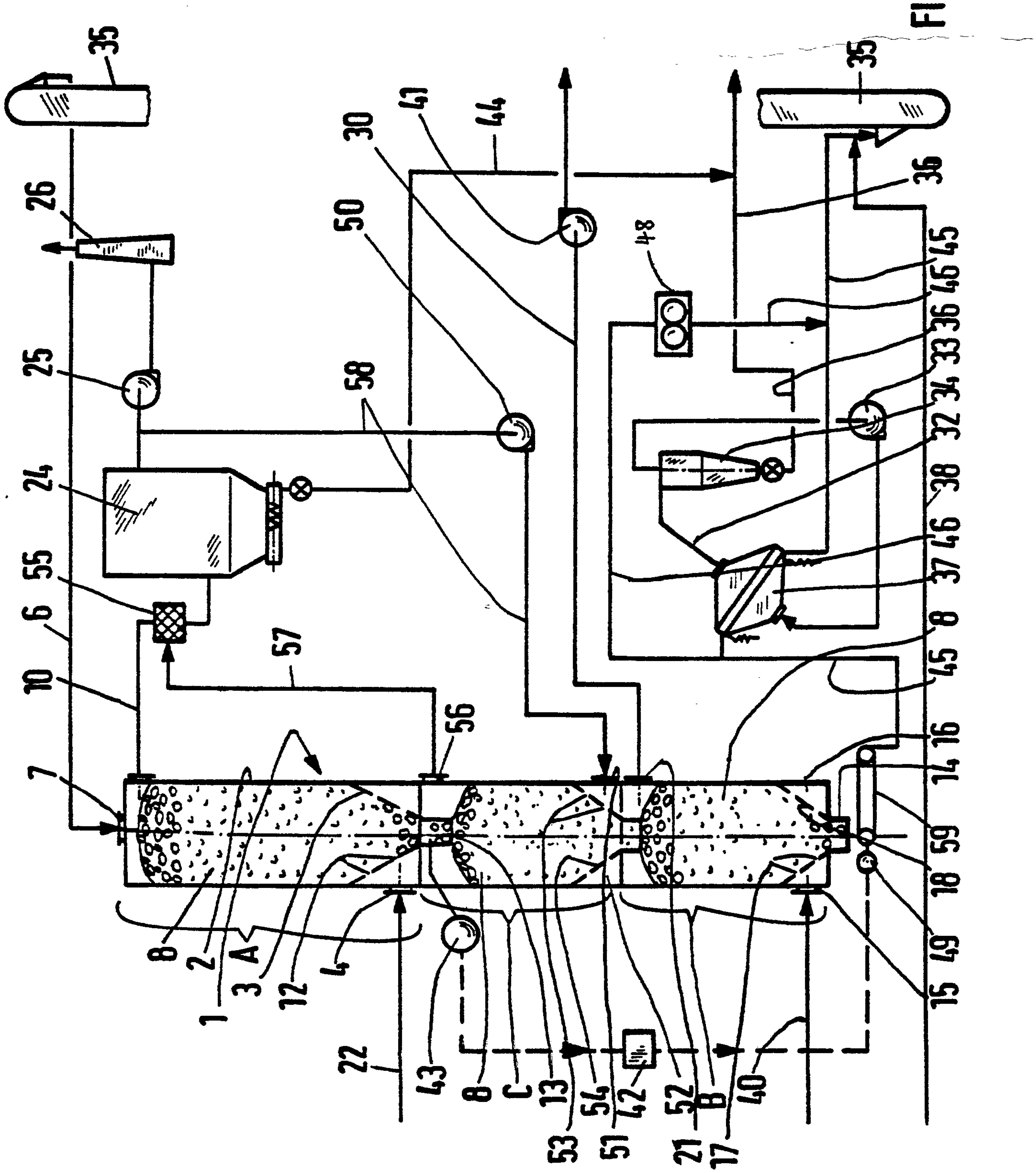
1
2
3
4
6
7
8
10
12
13
14
15
16
17
18
21
22
24
25
26
30
32
33
34
35
36
37
38
40
41
42
43
44
45
46
48
49
50
51
52
53
54
55
56
57
58
59
A
B
C

FIG. 2

Fig. 3